# FASCICULE DE BREVET EUROPEEN

(11) **EP 0 702 234 B1**
(45) Date de publication et mention de la délivrance du brevet: **02.12.1998**
(21) Numéro de dépôt: 95420247.9
(22) Date de dépôt: 04.09.1995
(51) Int. Cl.: G01P 1/04

(54) **Capteur de vitesse à effet Hall**
Halleffekt-Geschwindigkeitsmessaufnehmer
Hall effect speed sensor

(30) Priorité: 13.09.1994 FR 9411109
(43) Date de publication de la demande: 20.03.1996
(73) Titulaire: EATON S.A.M., MC-98000 Monaco (MC)
(72) Inventeur: Armiroli Jean, Les Floralies, F-06310 Beaulieu-sur-Mer (FR); Goubely, Aimé, F-06340 La Trinité (FR)
(74) Mandataire: Bratel, Gérard

(56) Documents cités:
- DE-A- 2 343 480
- DE-A- 4 142 727

## Description

La présente invention concerne un capteur de vitesse à effet Hall. Un tel capteur est en général monté en sortie de boîte de vitesses d'un véhicule automobile par exemple.

Le principe de fonctionnement de ce capteur est le suivant : un aimant permanent entraîné à la même vitesse de rotation qu'un pignon de sortie de boîte de vitesses tourne devant un détecteur à effet Hall qui restitue un signal en fonction des transitions pôle nord/pôle sud qui se succèdent devant sa partie sensible. Le signal obtenu est fonction de la vitesse de rotation de l'aimant, et l'analyse de ce signal permet ainsi de connaître cette vitesse. Pour améliorer la mesure, le nombre de paires de pôles (Nord/Sud) est augmenté. Dans certains capteurs de vitesse actuels, l'aimant comporte par exemple huit paires de pôles.

Pour avoir un signal "propre", c'est-à-dire sans parasites, il est nécessaire que les pôles d'aimant passent à une distance toujours constante du détecteur. De cette façon, le détecteur réagit de la même manière au passage de tous les pôles, et il fournit donc un signal identique à chaque passage. Le signal est alors périodique et le rapport cyclique est garanti. Pour obtenir un tel signal, l'aimant des capteurs de vitesse de type connu est monté sur un axe spécial prolongeant l'axe du pignon de sortie de boîte de vitesses. Cet axe portant l'aimant tourne à la même vitesse que le pignon de sortie de boîte de vitesses et est guidé par un palier. Ce palier est situé soit entre le pignon de sortie de boîte de vitesses et l'aimant, soit l'aimant est monté entre le pignon de sortie de boîte de vitesses et le palier. Ces montages permettent un bon centrage de l'aimant, donc garantissent la précision du rapport cyclique, mais ils ont l'inconvénient de présenter un encombrement relativement important car la hauteur du palier vient s'ajouter à la hauteur du capteur proprement dit (c'est-à-dire l'ensemble aimant-détecteur). La présence du palier augmente aussi le coût du capteur et complique son montage. Enfin, des frottements apparaissent au niveau du palier, entraînant ainsi une usure. Cet état de la technique est illustré, par exemple, par le document DE-A-4142727.

Le but de l'invention est de fournir un capteur de vitesse à effet Hall garantissant une bonne précision dans le rapport cyclique, d'encombrement réduit et, si possible, de montage simple, et d'un prix de revient réduit.

A cet effet, le capteur de vitesse à effet Hall selon l'invention, destiné à être monté en sortie de boîte de vitesses et du type comportant un boîtier fixe dans lequel est monté en position fixe un détecteur à effet Hall, coopérant avec un aimant permanent annulaire monté dans le boîtier et faisant face au détecteur, ledit aimant pendant l'utilisation étant disposé coaxialement à un pignon de sortie de boîte de vitesses, entraîné par celui-ci en rotation, est caractérisé en ce que l'aimant est monté pendant l'utilisation centré sur l'axe du pignon de sortie de boite de vitesses, à l'extrémité libre de cet axe, par une pièce intermédiaire présentant une partie en forme de douille emmanchée sur cette extrémité libre de l'axe, de manière que le capteur de vitesse ne comporte aucun palier.

Ce montage permet de supprimer l'axe spécial sur lequel est monté l'aimant des capteurs de vitesse connus, et aussi de supprimer tout palier interne au capteur. L'aimant est centré sur l'axe du pignon de sortie de boîte de vitesses, ce qui permet de garantir la précision du rapport cyclique.

La pièce intermédiaire permet un bon centrage car la surface de contact et de guidage avec l'axe du pignon peut être importante. D'autre part, elle permet d'adapter le capteur de vitesse sans palier selon l'invention sur tous les pignons de sortie de boîte de vitesses classiques actuels, sans modification de ces pignons.

Avantageusement, la pièce intermédiaire est entraînée en rotation par l'intermédiaire d'un carré central, situé sur l'axe de la pièce intermédiaire au niveau de la douille, pendant l'utilisation venant en prise dans un trou s'étendant axialement, de section carrée, ménagé dans l'axe du pignon de sortie de boîte de vitesses. Lorsque l'état de surface de l'axe du pignon de sortie de boîte de vitesses n'est pas assez bon, cet axe est de préférence chemisé. Le matériau utilisé pour la fabrication de la pièce intermédiaire peut être une matière synthétique.

Selon un mode d'exécution avantageux pour garantir le bon positionnement de l'aimant par rapport au détecteur, l'aimant vient en butée contre un épaulement ménagé sur la pièce intermédiaire, et est bloqué en translation par une rondelle montée sur la pièce intermédiaire.

Pour l'entraînement en rotation de l'aimant, on prévoit par exemple que la pièce intermédiaire présente des nervures s'étendant axialement à sa surface extérieure et venant en prise avec des rainures correspondantes ménagées à la surface intérieure de l'aimant.

Le montage de l'ensemble du capteur de vitesse est facilité lorsque l'aimant est monté glissant sur la pièce intermédiaire. Ainsi, le montage s'effectue par empilage des pièces constitutives les unes sur les autres. De plus, le montage glissant permet d'éviter une opération de surmoulage.

De toute façon, l'invention sera bien comprise à l'aide de la description qui suit, en référence au dessin schématique annexé représentant, à titre d'exemple, une forme d'exécution de ce capteur de vitesse à effet Hall :

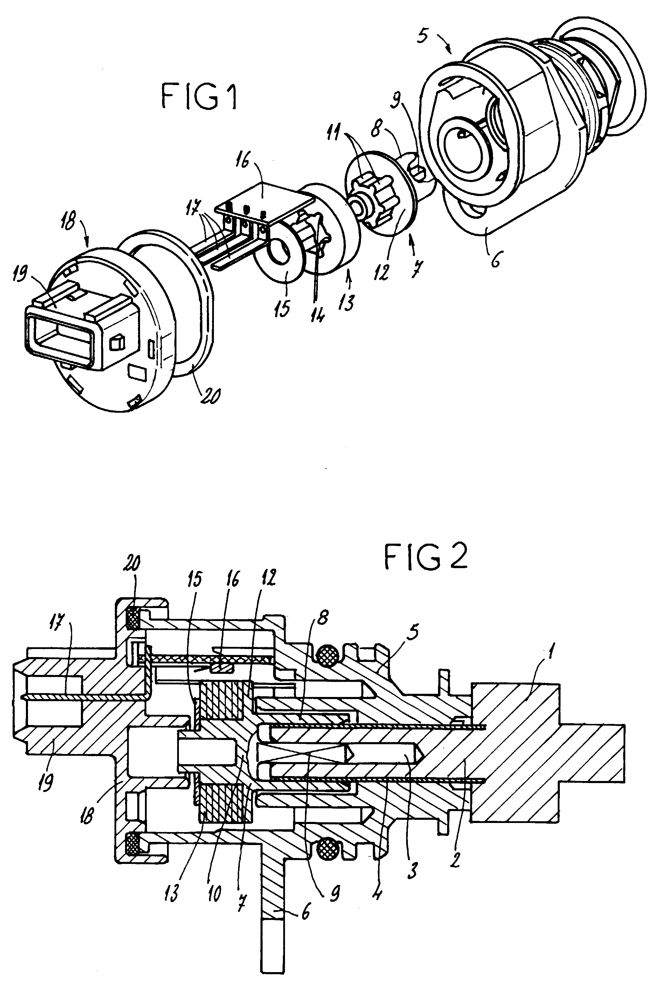

Figure 1 est une vue en perspective éclatée d'un capteur de vitesse à effet Hall conforme à l'invention ;
Figure 2 est une vue en coupe longitudinale à échelle agrandie du capteur de vitesse représenté à la figure 1, à l'état monté.

Le capteur de vitesse à effet Hall représenté au dessin est destiné à être monté en sortie de boîte de vitesses d'un véhicule automobile. La boîte de vitesses comporte un pignon de sortie 1. Le pignon 1 possède un axe 2 prévu pour permettre le montage d'un capteur de vitesse. L'axe 2 comporte, à son extrémité libre, un trou borgne 3 s'étendant axialement et de section carrée. Afin de présenter un bon état de surface, l'axe 2 du pignon 1 est chemisé avec une chemise en acier 4.

Le capteur de vitesse comporte un boîtier fixe 5, rendu solidaire d'un point fixe, par exemple le carter de la boîte de vitesses, par l'intermédiaire d'une patte de fixation 6 et d'une vis (non représentée) ; le boîtier 5 s'emmanche sur l'axe 2 du pignon 1 de sortie de boîte de vitesses.

Une fois le boîtier fixe 5 emmanché sur l'axe 2, une pièce intermédiaire 7 en matière synthétique vient coiffer l'extrémité libre de cet axe 2. La pièce intermédiaire 7 présente une partie en forme de douille 8 venant s'emmancher sur l'extrémité de l'axe 2 du pignon de sortie de boîte de vitesses. Au centre de la douille 8, sur l'axe de celle-ci, se trouve un carré central 9 destiné à coopérer avec le trou borgne 3 de l'axe 2 du pignon de sortie de boîte de vitesses. Le carré central 9 est rattaché à la douille 8 par une paroi 10 perpendiculaire à l'axe de la pièce intermédiaire 7, et il permet l'entraînement en rotation de cette dernière. La surface extérieure de la pièce intermédiaire 7 présente, à son extrémité opposée au pignon 1 de sortie de la boîte de vitesses, des nervures 11 s'étendant axialement et limitées du côté du pignon 1 par un épaulement 12. De l'autre côté, les nervures 11 s'arrêtent à quelques millimètres de la face en bout de la pièce intermédiaire 7.

Un aimant permanent 13 multipolaire, comportant par exemple huit paires de pôles, de forme annulaire et présentant sur sa surface interne des rainures 14 correspondant à la forme des nervures 12, est monté glissant sur la pièce intermédiaire 7. L'aimant 13 vient en butée contre l'épaulement 12 et est bloqué en translation par une rondelle 15 qui est montée à l'extrémité de la pièce intermédiaire 7, opposée au pignon 1, sur la zone dépourvue de nervures.

Face à l'aimant 13 et monté en position fixe dans le boîtier fixe 5, se trouve un détecteur à effet Hall 16. Celui-ci détecte le passage successif des différents pôles nord et pôles sud de l'aimant 13, qui défilent devant lui lorsque cet aimant tourne, entraîné par l'axe 2 du pignon 1. Trois lames de connexion électrique 17 permettent de transmettre le signal émis par le détecteur à effet Hall 16 vers un tachymètre (non représenté).

Un couvercle 18 présentant des fentes pour le passage des lames 17, et pourvu d'une partie évidée 19 destinée à coopérer avec une fiche de raccord électrique (non représentée), vient fermer le boîtier fixe 5. Un joint 20 étanchéifie le boîtier 5 et protège l'intérieur de celui-ci des poussières et divers liquides présents à l'extérieur.

Le capteur de vitesse ainsi réalisé ne comporte lui-même aucun palier. Grâce à l'absence de palier, il présente un encombrement réduit au minimum, et du fait de l'absence de frottements, l'usure est très réduite. De plus, comme l'aimant 13 est monté sur l'axe 2 du pignon 1, son centrage est bon, ce qui garantit pour le capteur une précision dans le rapport cyclique. La grande surface de contact entre la pièce intermédiaire 7 et l'axe 2 favorise également le bon centrage. Cette pièce 7 permet également de monter un tel capteur de vitesse sans palier sur tout pignon de sortie de boîte de vitesse classique sans qu'il soit nécessaire de modifier ce pignon ou son axe.

D'autres moyens que ceux précédemment décrits peuvent être choisis pour entraîner la pièce intermédiaire 7 et l'aimant 13 en rotation ; par exemple, au lieu d'un carré central 9 et d'un ensemble nervures 11 rainures 14, on peut envisager d'utiliser une clavette, ou bien une liaison par vis, ou encore un montage avec serrage en force.

## Revendications

1. Capteur de vitesse à effet Hall destiné à être monté en sortie de boîte de vitesses, comportant un boîtier fixe (5) dans lequel est monté en position fixe un détecteur (16) à effet Hall, coopérant avec un aimant permanent annulaire (13) monté dans le boîtier (5) et faisant face au détecteur (16), ledit aimant (13) pendant l'utilisation étant disposé coaxialement à un pignon (1) de sortie de boîte de vitesses, entraîné par celui-ci en rotation, caractérisé en ce que l'aimant (13) est monté pendant l'utilisation centré sur l'axe (2) du pignon (1) de sortie de boîte de vitesses, à l'extrémité libre de cet axe (2), par une pièce intermédiaire (7) présentant une partie en forme de douille (8) emmanchée sur cette extrémité libre de l'axe (2) de manière que le capteur de vitesse ne comporte aucun palier.

2. Capteur de vitesse selon la revendication 1, caractérisé en ce que la pièce intermédiaire (7) est entraînée en rotation par l'intermédiaire d'un carré central (9), situé sur l'axe de la pièce intermédiaire (7) au niveau de la douille (8), pendant l'utilisation venant en prise dans un trou (3) s'étendant axialement, de section carrée, ménagé dans l'axe (2) du pignon (1) de sortie de boite de vitesses.

3. Capteur de vitesse selon la revendication 1 ou 2, caractérisé en ce que la pièce intermédiaire (7) est réalisée en matière synthétique.

4. Capteur de vitesse selon l'une quelconque des revendications 1 à 3, caractérisé en ce que l'aimant (13) vient en butée contre un épaulement (12) ménagé sur la pièce intermédiaire (7), et est bloqué en translation par une rondelle (15) montée sur la pièce intermédiaire (7).

5. Capteur de vitesse selon l'une quelconque des revendications 1 à 4, caractérisé en ce que la pièce intermédiaire (7) présente des nervures (11) s'étendant axialement à sa surface extérieure et venant en prise avec des rainures (14) correspondantes ménagées à la surface intérieure de l'aimant (13).

6. Capteur de vitesse selon l'une quelconque des revendications 1 à 5, caractérisé en ce que l'aimant (13) est monté glissant sur la pièce intermédiaire (7).

## Patentansprüche

1. Halleffekt-Geschwindigkeitsmessaufnehmer, vorgesehen für die Montage am Ausgang des Getriebes, mit einem festen Gehäuse (5), in dem an einer festen Position eine Hallsonde (16) befestigt ist, die mit einem ringförmigen Permanentmagneten (13) zusammenwirkt, der in dem Gehäuse (5) befestigt ist und der Sonde (16) gegenüber liegt, wobei der Magnet (13) während der Verwendung koaxial zu einem Ausgangsritzel (1) des Getriebes angeordnet ist, durch welches er in Rotation versetzt wird, dadurch gekennzeichnet, daß der Magnet (13) während der Benutzung zentriert auf der Achse (12) des Ausgangsritzels (1) des Getriebes befestigt ist, an dem freien Ende dieser Achse (2), durch ein Zwischenstück (7), das einen Bereich in der Form einer Hülse (8) aufweist, die in einer Weise auf das freie Ende der Achse (2) aufgeschrumpft ist, daß der Geschwindigkeitsaufnehmer kein Lager umfaßt.

2. Geschwindigkeitsmessaufnehmer nach Anspruch 1, dadurch gekennzeichnet, daß das Zwischenstück (7) mit Hilfe eines zentralen Vierkants (9) in Rotation versetzt wird, der während der Benutzung auf der Achse des Zwischenstückes (7) auf der Höhe der Hülse (8) angeordnet ist und in Eingriff mit einer sich axial erstreckenden Bohrung (3) mit quadratischem Querschnitt kommt, das in der Achse (2) des Ausgangsritzels (1) des Getriebes ausgebildet ist.

3. Geschwindigkeitsmessaufnehmer nach Anspruch 1, dadurch gekennzeichnet, daß das Zwischenstück (7) aus einem synthetischen Material gemacht ist.

4. Geschwindigkeitsmessaufnehmer nach einem der Ansprüche 1 bis 3, dadurch gekennzeichnet, daß der Magnet (13) in Anschlag gegen eine Schulter (12) kommt, die in dem Zwischenstück (7) ausgebildet ist, und durch eine Unterlegscheibe (15), die auf dem Zwischenstück befestigt ist, an einer Translation gehindert ist.

5. Geschwindigkeitsmessaufnehmer nach einem der Ansprüche 1 bis 4, dadurch gekennzeichnet, daß das Zwischenstück (7) Rippen (11) aufweist, die sich axial auf seiner Außenseite erstrecken und in Eingriff mit korrespondierenden Nuten (14) kommen, die an der inneren Oberfläche des Magneten (13) ausgebildet sind.

6. Geschwindigkeitsmessaufnehmer nach einem der Ansprüche 1 bis 5, dadurch gekennzeichnet, daß der Magnet (13) gleitend aufdem Zwischenstück (7) befestigt ist.

## Claims

1. Hall effect speed sensor intended to be mounted at the output from a gearbox, having a fixed casing (5) in which a Hall effect detector (16) is mounted in a fixed position, cooperating with an annular permanent magnet (13) mounted in the casing (5) and facing the detector (16), the said magnet (13), during use, being disposed coaxially with a gearbox output pinion (1) and rotated by the latter, characterised in that the magnet (13) is mounted, during use, centred on the shaft (2) of the gearbox output pinion (1), at the free end of the said shaft (2), by means of an intermediate piece (7) having a part in the form of sleeve (8) bitted on the said free end of the shaft (2) so that the speed sensor does not have any bearing.

2. Speed sensor according to Claim 1, characterised in that the intermediate piece (7) is rotated by means of a central bush (9) situated on the axis of the intermediate piece (7) level with the sleeve (8), during use coming into engagement in an axially extending hole (3) with a square cross section, formed in the shaft (2) of the gearbox output pinion (1).

3. Speed sensor according to Claim 1 or 2, characterised in that the intermediate piece (7) is produced from synthetic material.

4. Speed sensor according to any one of Claims 1 to 3, charactensed in that the magnet (3) comes into abutment against a shoulder (12) formed on the intermediate piece (7), and is locked with respect to translational movement by a washer (15) amounted on the intermediate piece (7).

5. Speed sensor according to any one of Claims 1 to 4, characterised in that the intermediate piece (7) has ribs (11) extending axially on its external surface and coming into engagement with corresponding grooves (14) formed on the internal surface of the magnet (13).

6. Speed sensor according in any one of Claims 1 to 5, characterised in that the magnet (13) is slidably mounted on the intermediate piece (7).
